# EUROPEAN PATENT SPECIFICATION

(11) **EP 3 738 874 B1**
(45) Date of publication and mention of the grant of the patent: **12.07.2023**
(21) Application number: 20175062.7
(22) Date of filing: 15.05.2020
(51) Int. Cl.: B64C 27/04, B64D 31/00, F02C 9/42

(54) **SYSTEM AND METHOD FOR OPERATING A ROTORCRAFT**
SYSTEM UND VERFAHREN ZUM BETREIBEN EINES DREHFLÜGLERS
SYSTÈME ET PROCÉDÉ DE FONCTIONNEMENT D'UN GIRAVION

(30) Priority: 15.05.2019 US 201962848237 P; 16.05.2019 US 201962848699 P; 24.05.2019 US 201962852428 P; 31.10.2019 US 201916670607
(43) Date of publication of application: 18.11.2020
(73) Proprietor: Pratt & Whitney Canada Corp., Longueuil, Québec J4G 1A1 (CA)
(72) Inventor: BEAUCHESNE-MARTEL, Philippe, (01BE5) Longueuil, Québec J4G 1A1 (CA); MANOUKIAN, Patrick, (01BE5) Longueuil, Québec J4G 1A1 (CA)
(74) Representative: Dehns

(56) References cited:
- US-A1- 2013 219 905
- US-A1- 2017 131 687

## Description

### TECHNICAL FIELD

The present disclosure relates generally to a multi-engine aircraft powerplant system, and more particularly to a mode of operation of an aircraft.

### BACKGROUND OF THE ART

When operating aircraft with multiple engines, there may be certain portions of a mission that do not require both engines to be operating at full power. In cruising conditions, operating a single engine at a relatively high power, instead of multiple engines at lower power, may allow for better fuel efficiency. For example, one or more engine(s) are operated at high power, and one or more remaining engine(s) are operated in what is sometimes referred to as a "standby" mode. However, certain engine operating states may not be conducive to operating engine(s) in a standby mode.

Therefore, improvements are needed.

US 2017/131687 A1 discloses a prior art system for operating a rotorcraft according to the preamble of claim 9.

### SUMMARY

In accordance with a broad aspect, there is provided a method for operating a rotorcraft comprising a plurality of engines configured to provide motive power to the rotorcraft. A request to enter into an asymmetric operating regime (AOR), in which at least one first engine of the plurality of engines is an active engine and is operated in an active mode to provide motive power to the rotorcraft and at least one second engine of the plurality of engines is a standby engine and is operated in a standby mode to provide substantially no motive power to the rotorcraft, is obtained. A power capability of the active engine of the rotorcraft is determined. The power capability is compared to a current power demand for the rotorcraft. When the current power demand is greater than the power capability of the active engine, a standby-engine power output of the standby engine of the rotorcraft is reduced, and the reduction in the standby-engine power output is compensated for by adjusting an active-engine power output of the active engine and/or at least one flight control of the rotorcraft.

In an optional embodiment, reducing the standby-engine power output of the standby engine comprises reducing the standby-engine power output to a first intermediate power level; and responsive to an increase in the active-engine power output, reducing the standby-engine power output to a standby power level lower than the first intermediate power level.

In an optional embodiment, compensating for the reduction in the standby-engine power output comprises, responsive to the standby-engine power output reaching the first intermediate power level, increasing the active-engine power output to a power level corresponding to the power capability.

In an optional embodiment, compensating for the reduction in the standby-engine power output comprises: reducing the active-engine power output to a second intermediate power level, wherein the sum of the first and second intermediate power levels is equivalent to the power capability of the active engine; and after the active-engine power output reaches the second intermediate power level, increasing the active-engine power output to a subsequent power level equivalent to the power capability.

In an optional embodiment, compensating for the reduction in the standby-engine power output comprises: determining a requisite total power for the rotorcraft; and transmitting an indication of the requisite total power to an autopilot system of the rotorcraft to cause the autopilot system to adjust the at least one flight control of the rotorcraft to achieve the requisite total power, the at least one flight control comprising a main rotor blade pitch, a tail rotor blade pitch, and/or a cyclic input for the rotorcraft.

In an optional embodiment, the method further comprises, responsive to obtaining the request to enter into the AOR performing a safety check for the active engine and/or the rotorcraft.

In an optional embodiment, compensating for the reduction in the standby-engine power output comprises adjusting the at least one flight control of the rotorcraft based on input from an operator of the rotorcraft.

In an optional embodiment, the method further comprises, when the current power demand is greater than the power capability of the active engine: issuing an alert to an operator of the rotorcraft; and delaying the reducing and compensating until the current power demand is less than or equal to the power capability of the active engine.

In an optional embodiment, the method further comprises, when the current power demand is less than or equal to the power capability of the active engine: reducing the standby-engine power output of a standby engine of the rotorcraft; and increasing the active-engine power output of the active engine to a power level equivalent to the current power demand.

In an optional embodiment, determining the power capability of the active engine is based on an altitude of the rotorcraft, an airspeed of the rotorcraft, an ambient temperature, an accessory power extraction level, and/or a bleed air extraction level.

In accordance with another broad aspect, there is provided a system for operating a rotorcraft comprising a plurality of engines configured to provide motive power to the rotorcraft. The system comprises a processing unit and a non-transitory computer-readable medium having stored thereon program instructions. The program instructions are executable by the processing unit for: obtaining a request to enter into an asymmetric operating regime (AOR), in which at least one first engine of the plurality of engines is an active engine and is operated in an active mode to provide motive power to the rotorcraft and at least one second engine of the plurality of engines is a standby engine and is operated in a standby mode to provide substantially no motive power to the rotorcraft; determining a power capability of the active engine of the rotorcraft; comparing the power capability to a current power demand for the rotorcraft; and when the current power demand is greater than the power capability of the active engine: reducing a standby-engine power output of the standby engine of the rotorcraft; and compensating for the reduction in the standby-engine power output by adjusting an active-engine power output of the active engine and/or at least one flight control of the rotorcraft.

In at least one embodiment, reducing the standby-engine power output of the standby engine comprises: reducing the standby-engine power output to a first intermediate power level; and responsive to an increase in the active-engine power output, reducing the standby-engine power output to a standby power level lower than the first intermediate power level.

In at least one embodiment, compensating for the reduction in the standby-engine power output comprises, responsive to the standby-engine power output reaching the first intermediate power level, increasing the active-engine power output to a power level corresponding to the power capability.

In at least one embodiment, compensating for the reduction in the standby-engine power output comprises: reducing the active-engine power output to a second intermediate power level, wherein the sum of the first and second intermediate power levels is equivalent to the power capability of the active engine; and after the active-engine power output reaches the second intermediate power level, increasing the active-engine power output to a subsequent power level equivalent to the power capability.

In an optional embodiment, compensating for the reduction in the standby-engine power output comprises: determining a requisite total power for the rotorcraft; and transmitting an indication of the requisite total power to an autopilot system of the rotorcraft to cause the autopilot system to adjust the at least one flight control of the rotorcraft to achieve the requisite total power, the at least one flight control comprising a main rotor blade pitch, a tail rotor blade pitch, and/or a cyclic input for the rotorcraft.

In an optional embodiment, the program instructions are further executable for, responsive to obtaining the request to enter into the AOR, performing a safety check for the active engine and/or the rotorcraft.

In an optional embodiment, compensating for the reduction in the standby-engine power output comprises adjusting the at least one flight control of the rotorcraft based on input from an operator of the rotorcraft.

In an optional embodiment, the program instructions are further executable for, when the current power demand is greater than the power capability of the active engine: issuing an alert to an operator of the rotorcraft; and delaying the reducing and compensating until the current power demand is less than or equal to the power capability of the active engine.

In an optional embodiment, the program instructions are further executable for, when the current power demand is less than or equal to the power capability of the active engine: reducing the standby-engine power output of a standby engine of the rotorcraft; and increasing the active-engine power output of the active engine to a power level equivalent to the current power demand.

Features of the systems, devices, and methods described herein may be used in various combinations, in accordance with the embodiments described herein. Any of the above features may be used alone, together in any suitable combination, and/or in a variety of arrangements, as appropriate.

### BRIEF DESCRIPTION OF THE DRAWINGS

Reference is now made to the accompanying figures in which:
FIG. 1A is a schematic view of a multi-engine aircraft;
FIG. 1B is a schematic representation of an exemplary multi-engine system for the aircraft of FIG. 1A, showing axial cross-sectional views of two gas turbine engines;
FIG. 2 is a cross-sectional view of an example turboshaft engine of the aircraft of FIG. 1;
FIG. 3 is a block diagram of an example architecture for operating a rotorcraft
FIG. 4 is a graphical illustration of an example approach for operating a rotorcraft;
FIG. 5 is a flowchart of an example method for operating a rotorcraft; and
FIG. 6 is a block diagram of an example computing device for implementing the method of FIG. 5.

It will be noted that throughout the appended drawings, like features are identified by like reference numerals.

### DETAILED DESCRIPTION

There are described herein methods and systems for operating a multi-engine aircraft comprising a plurality of engines configured to provide motive power to the rotorcraft. Under certain conditions, it can be desirable to operate the aircraft in a so-called "asymmetric operating regime" (AOR), which is described in greater detail hereinbelow. When operated in the AOR, multiple engines of the aircraft, which may be a multi-engine helicopter or other rotorcraft, are operated at different output power levels.

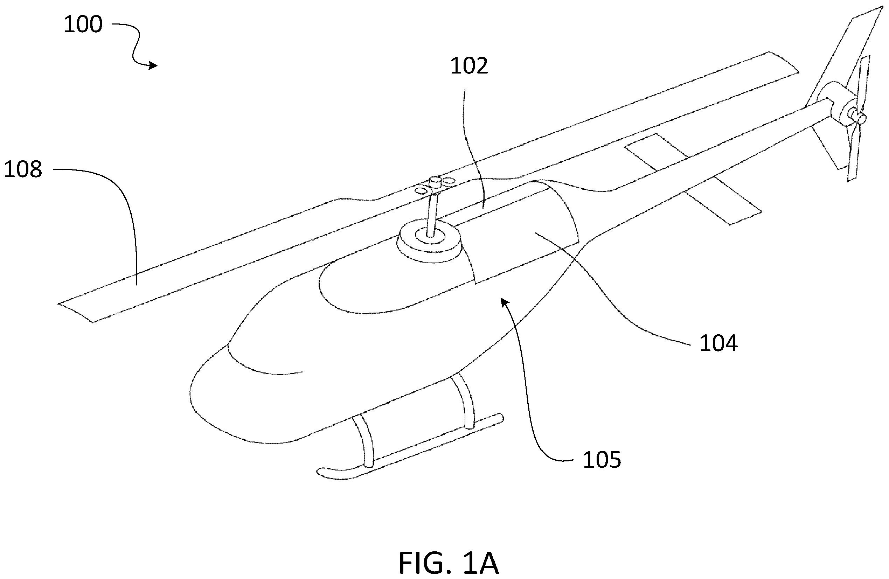

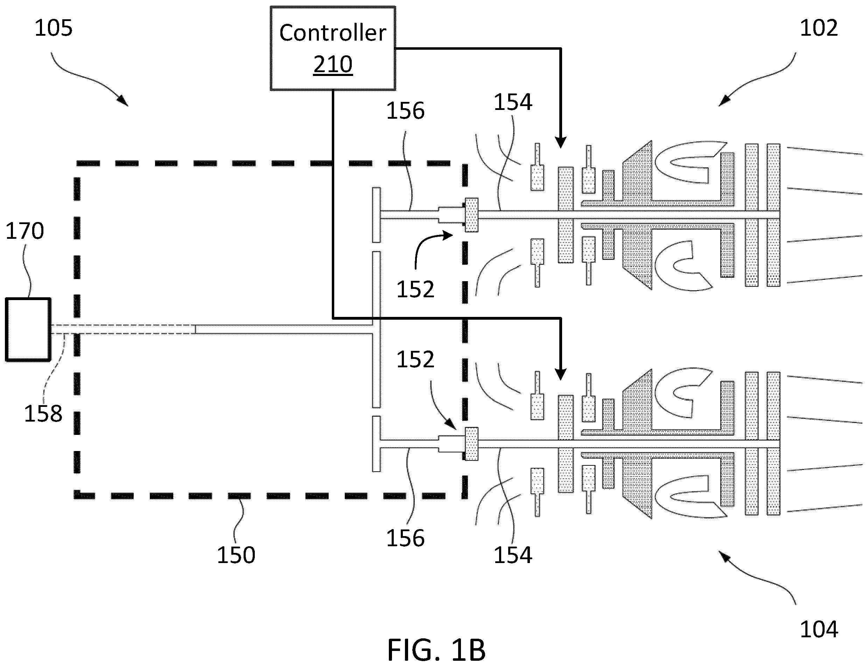

FIG. 1A depicts an exemplary multi-engine aircraft 100, which in this case is a helicopter. The aircraft 100 includes at least two gas turbine engines 102, 104. These two engines 102, 104 may be interconnected, in the case of the depicted helicopter application, by a common gearbox to form a multi-engine system 105, as shown in FIG. 1B, which drives a main rotor 108.

Turning now to Fig. 1B, illustrated is an example multi-engine system 105 that may be used as a power plant for a rotorcraft such as the helicopter 100. The multi-engine system 105 includes two or more gas turbine engines 102, 104. In the case of a helicopter application, these gas turbine engines 102, 104 will be turboshaft engines. Control of the multi-engine system 105 is effected by one or more controller(s) 210, which may be FADEC(s), electronic engine controller(s) (EEC(s)), or the like, that are programmed to manage, as described herein below, the operation of the engines 102, 104 to reduce an overall fuel burn, particularly during sustained cruise operating regimes, wherein the aircraft is operated at a sustained (steady-state) cruising speed and altitude. The cruise operating regime is typically associated with the operation of prior art engines at equivalent part-power, such that each engine contributes approximately equally to the output power of the system 105. Other phases of a typical helicopter mission include transient phases like take-off, climb, stationary flight (hovering), approach and landing. Cruise may occur at higher altitudes and higher speeds, or at lower altitudes and speeds, such as during a search phase of a search-and-rescue mission.

More particularly, the multi-engine system 105 of this embodiment includes first and second turboshaft engines 102, 104 each having a respective transmission 152 interconnected by a common output gearbox 150 to drive a common load 170. In one embodiment, the common load 170 may comprise a rotary wing of a rotary-wing aircraft. For example, the common load 170 may be a main rotor 108 of the aircraft 100. Depending on the type of the common load 170 and on the operating speed thereof, each of turboshaft engines 102, 104 may be drivingly coupled to the common load 170 via the output gearbox 150, which may be of the speed-reduction type.

For example, the gearbox 150 may have a plurality of transmission shafts 156 to receive mechanical energy from respective output shafts 154 of respective turboshaft engines 102, 104. The gearbox 150 may be configured to direct at least some of the combined mechanical energy from the plurality of the turboshaft engines 102, 104 toward a common output shaft 158 for driving the common load 170 at a suitable operating (e.g., rotational) speed. It is understood that the multi-engine system 105 may also be configured, for example, to drive accessories and/or other elements of an associated aircraft. As will be described, the gearbox 150 may be configured to permit the common load 170 to be driven by either of the turboshaft engines 102, 104 or, by a combination of both engines 102, 104 together.

In the present description, while the aircraft conditions (cruise speed and altitude) are substantially stable, the engines 102, 104 of the system 105 may be operated asymmetrically, with one engine operated in a high-power "active" mode and the other engine operated in a lower-power (which could be no power, in some cases) "standby" mode. Doing so may provide fuel saving opportunities to the aircraft, however there may be other suitable reasons why the engines are desired to be operated asymmetrically. This operation management may therefore be referred to as an "asymmetric mode" or the aforementioned AOR, wherein one of the two engines is operated in a lower-power (which could be no power, in some cases) "standby mode" while the other engine is operated in a high-power "active" mode. Such an asymmetric operation may be engaged for a cruise phase of flight (continuous, steady-state flight which is typically at a given commanded constant aircraft cruising speed and altitude). The multi-engine system 105 may be used in an aircraft, such as the helicopter 100, but also has applications in suitable marine and/or industrial applications or other ground operations.

Referring still to Fig. 1B, according to the present description the multi-engine system 105 is driving in this example the helicopter 100 which may be operated in the AOR, in which a first of the turboshaft engines (say, 102) is operated at high power in an active mode and the second of the turboshaft engines (104 in this example) is operated in a lower-power (which could be no power, in some cases) standby mode. In one example, the first turboshaft engine 102 may be controlled by the controller(s) 210 to run at full (or near-full) power conditions in the active mode, to supply substantially all or all of a required power and/or speed demand of the common load 170. The second turboshaft engine 104 may be controlled by the controller(s) 210 to operate at lower-power or no-output-power conditions to supply substantially none or none of a required power and/or speed demand of the common load 170. Optionally, a clutch may be provided to declutch the low-power engine. Controller(s) 210 may control the engine's governing on power according to an appropriate schedule or control regime. The controller(s) 210 may comprise a first controller for controlling the first engine 102 and a second controller for controlling the second engine 104. The first controller and the second controller may be in communication with each other in order to implement the operations described herein. In some embodiments, a single controller 210 may be used for controlling the first engine 102 and the second engine 104.

In another example, the AOR of the engines may be achieved through the one or more controller's 210 differential control of fuel flow to the engines, as described in pending application 16/535,256. Low fuel flow may also include zero fuel flow in some examples.

Although various differential control between the engines of the engine system 105 are possible, in one particular embodiment the controller(s) 210 may correspondingly control fuel flow rate to each engine 102, 104 accordingly. In the case of the standby engine, a fuel flow (and/or a fuel flow rate) provided to the standby engine may be controlled to be between 70% and 99.5% less than the fuel flow (and/or the fuel flow rate) provided to the active engine. In the AOR, the standby engine may be maintained between 70% and 99.5% less than the fuel flow to the active engine. In some embodiments of the method, the fuel flow rate difference between the active and standby engines may be controlled to be in a range of 70% and 90% of each other, with fuel flow to the standby engine being 70% to 90% less than the active engine. In some embodiments, the fuel flow rate difference may be controlled to be in a range of 80% and 90%, with fuel flow to the standby engine being 80% to 90% less than the active engine.

In another embodiment, the controller 210 may operate one engine (say 104) of the multiengine system 105 in a standby mode at a power substantially lower than a rated cruise power level of the engine, and in some embodiments at substantially zero output power and in other embodiments less than 10% output power relative to a reference power (provided at a reference fuel flow). Alternatively still, in some embodiments, the controller(s) 210 may control the standby engine to operate at a power in a range of 0% to 1% of a rated full-power of the standby engine (i.e. the power output of the second engine to the common gearbox remains between 0% to 1% of a rated full-power of the second engine when the second engine is operating in the standby mode).

In another example, the engine system 105 of Fig. 1B may be operated in an AOR by control of the relative speed of the engines using controller(s) 210, that is, the standby engine is controlled to a target low speed and the active engine is controlled to a target high speed. Such a low speed operation of the standby engine may include, for example, a rotational speed that is less than a typical ground idle speed of the engine (i.e. a "sub-idle" engine speed). Still other control regimes may be available for operating the engines in the AOR, such as control based on a target pressure ratio, or other suitable control parameters.

Although the examples described herein illustrate two engines, AOR is applicable to more than two engines, whereby at least one of the multiple engines is operated in a low-power standby mode while the remaining engines are operated in the active mode to supply all or substantially all of a required power and/or speed demand of a common load.

In use, the first turboshaft engine (say 102) may operate in the active mode while the other turboshaft engine (say 104) may operate in the standby mode, as described above. During operation in the AOR, if the helicopter 100 needs a power increase (expected or otherwise), the second turboshaft engine 104 may be required to provide more power relative to the low power conditions of the standby mode, and possibly return immediately to a high- or full-power condition. This may occur, for example, in an emergency condition of the multi-engine system 105 powering the helicopter 100, wherein the "active" engine loses power the power recovery from the lower power to the high power may take some time. Even absent an emergency, it will be desirable to repower the standby engine to exit the AOR.

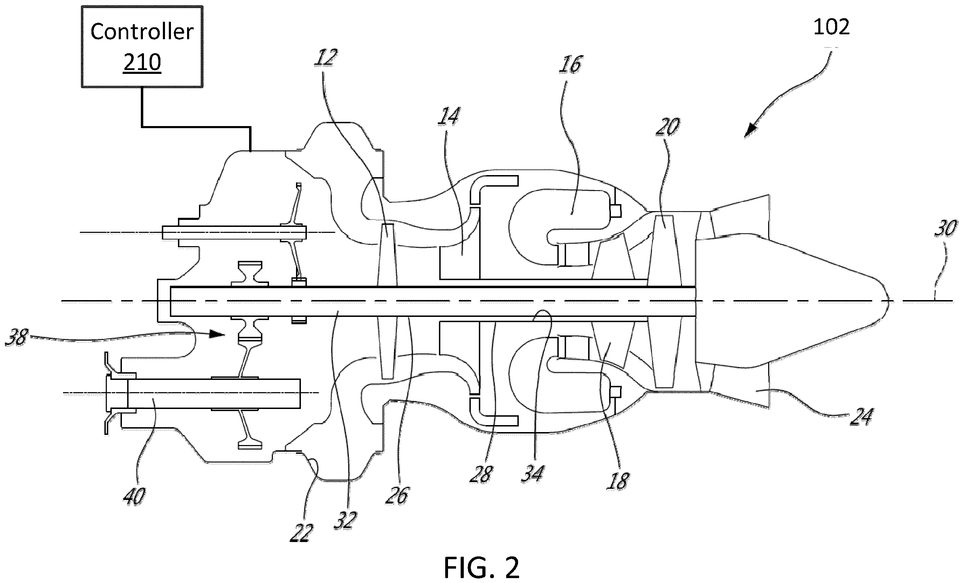

With reference to FIG. 2, the turboshaft engines 102, 104 can be embodied as gas turbine engines. Although the foregoing discussion relates to engine 102, it should be understood that engine 104 can be substantively similar to engine 102. In this example, the engine 102 is a turboshaft engine generally comprising in serial flow communication a low pressure (LP) compressor section 12 and a high pressure (HP) compressor section 14 for pressurizing air, a combustor 16 in which the compressed air is mixed with fuel and ignited for generating an annular stream of hot combustion gases, a high pressure turbine section 18 for extracting energy from the combustion gases and driving the high pressure compressor section 14, and a lower pressure turbine section 20 for further extracting energy from the combustion gases and driving at least the low pressure compressor section 12.

The low pressure compressor section 12 may independently rotate from the high pressure compressor section 14. The low pressure compressor section 12 may include one or more compression stages and the high pressure compressor section 14 may include one or more compression stages. A compressor stage may include a compressor rotor, or a combination of the compressor rotor and a compressor stator assembly. In a multistage compressor configuration, the compressor stator assemblies may direct the air from one compressor rotor to the next.

The engine 102 has multiple, i.e. two or more, spools which may perform the compression to pressurize the air received through an air inlet 22, and which extract energy from the combustion gases before they exit via an exhaust outlet 24. In the illustrated embodiment, the engine 102 includes a low pressure spool 26 and a high pressure spool 28 mounted for rotation about an engine axis 30. The low pressure and high pressure spools 26, 28 are independently rotatable relative to each other about the axis 30. The term "spool" is herein intended to broadly refer to drivingly connected turbine and compressor rotors.

The low pressure spool 26 includes a low pressure shaft 32 interconnecting the low pressure turbine section 20 with the low pressure compressor section 12 to drive rotors of the low pressure compressor section 12. In other words, the low pressure compressor section 12 may include at least one low pressure compressor rotor directly drivingly engaged to the low pressure shaft 32 and the low pressure turbine section 20 may include at least one low pressure turbine rotor directly drivingly engaged to the low pressure shaft 32 so as to rotate the low pressure compressor section 12 at a same speed as the low pressure turbine section 20. The high pressure spool 28 includes a high pressure shaft 34 interconnecting the high pressure turbine section 18 with the high pressure compressor section 14 to drive rotors of the high pressure compressor section 14. In other words, the high pressure compressor section 14 may include at least one high pressure compressor rotor directly drivingly engaged to the high pressure shaft 34 and the high pressure turbine section 18 may include at least one high pressure turbine rotor directly drivingly engaged to the high pressure shaft 34 so as to rotate the high pressure compressor section 14 at a same speed as the high pressure turbine section 18. In some embodiments, the high pressure shaft 34 may be hollow and the low pressure shaft 32 extends therethrough. The two shafts 32, 34 are free to rotate independently from one another.

The engine 102 may include a transmission 38 driven by the low pressure shaft 32 and driving a rotatable output shaft 40. The transmission 38 may vary a ratio between rotational speeds of the low pressure shaft 32 and the output shaft 40.

As described hereinabove, control of the operation of the engine 102 can be effected by one or more control systems, for example the controller 210. The controller 210 can modulate a fuel flow rate provided to the engine 102, the position and/or orientation of variable geometry mechanisms within the engine 102, a bleed level of the engine 102, and the like. In some embodiments, the controller 210 is configured for controlling operation of multiple engines, for instance the engines 102 and 104. For example, the controller 210 can be provided with one or more Full Authority Digital Engine Controllers (FADECs) or similar devices. Each FADEC can be assigned to control the operation of one or more of the engines 102, 104. Additionally, in some embodiments the controller 210 can be configured for controlling operation of other elements of the aircraft 100, for instance the main rotor 108.

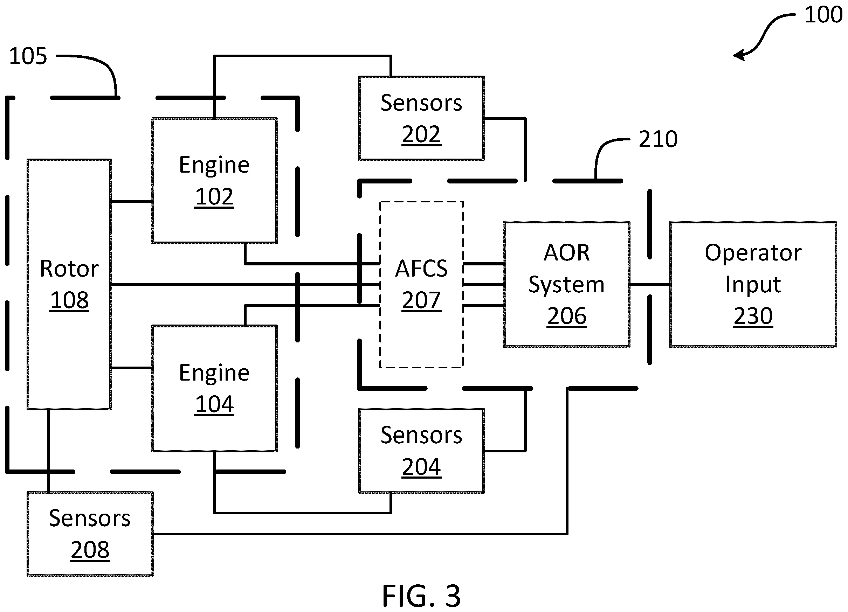

With reference to FIG. 3, the aircraft 100, comprising the engines 102, 104 and the rotor 108, is illustrated using a block diagram. More than two engines 102, 104 may be present on a same aircraft 100. The engines 102, 104 are mechanically coupled to the main rotor 108, for instance as illustrated in FIG. 1B, for causing the rotor 108 to rotate and produce thrust for the aircraft 100. Although FIG. 3 illustrates a singular rotor 108, it should be noted that the aircraft 100 can include any number of rotors, including multiple main rotors, one or more tail rotors, and the like. Collectively, the engines 102, 104, and the rotor 108 form part of the multi-engine system 105, which is controlled by the controller 210. The controller 210 is configured for receiving various instructions from an operator of the aircraft 100, for example via operator input 230.

The multi-engine system 105 can be controlled by way of the controller 210, as described hereinabove. The controller 210 can be composed of various devices, including one or more FADEC, one or more rotor controllers, or any other suitable devices for controlling operation of the engines 102, 104, and/or the rotor 108. In some embodiments, the operation of the engines 102, 104, and of the rotor 108 is controlled by way of one or more actuators, mechanical linkages, hydraulic systems, and the like. The controller 210 can be coupled to the actuators, mechanical linkages, hydraulic systems, and the like, in any suitable fashion for effecting control of the engines 102, 104 and/or of the rotor 108. For example, if a change in the operating conditions of the aircraft 100 is detected without any corresponding change in inputs from an operator of the aircraft 100, the FADEC can adjust the inputs to compensate for the uncommanded change.

One or more sensors 202, 204 are coupled to the engines 102, 104, for acquiring data about the operating parameters of the engines 102, 104. Additionally, sensors 208 are coupled to the rotor 108 for acquiring data about the operating parameters of the rotor 108. The sensors 202, 204, 208 may be any suitable type of sensor used to measure operating parameters such as but not limited to speed sensors, acceleration sensors, pressure sensors, temperature sensors, altitude sensors, and the like. The sensors 202, 204, 208, can be coupled to the controller 210 in any suitable fashion, including any suitable wired and/or wireless coupling techniques.

The controller 210 can be provided with an AOR system 206 which is configured to control operation of the engines 102, 104, and of the rotor 108, when the aircraft 100 is operating in the AOR. In certain embodiments, prior to entry into, or exit from, the AOR, various operating parameters for the engines 102, 104, and/or for the rotor 108, must be within predetermined bands and/or at, below, or above certain predetermined values. In some embodiments, when operating in the AOR, one of the engines, for example engine 102, is set as the so-called "active engine", and the other engines, in this example engine 104, is set as the so-called "standby engine". It should be noted that the association between engines 102, 104 and the active/standby status is solely for the purposes of example.

As described hereinabove, when operating in the AOR, the active engine (engine 102) and the passive engine (engine 104) are operated at different output power levels. In the course of operation of the aircraft 100, an operator of the aircraft 100 can request that the aircraft enter the AOR. Alternatively, or in addition, the aircraft 100 can be configured to automatically attempt to enter the AOR under certain conditions, for instance based on a pre-established flight mission plan. However, due to the operating parameters of the aircraft 100-including of the engines 102, 104, and the rotor 108-it may not be possible to immediately transition to the AOR.

The controller 210 is configured for obtaining a request to enter the AOR, for example via the operator input 230, or from within the controller 210. Other sources for the request are also considered, and it should be understood that the request can be the result of an automated process or issued based on a predetermined schedule or flight plan. The request can be obtained, for example, by the AOR system 206. In some embodiments, the request includes an indication of which of engines 102, 104 should be selected as the active engine, or which of the engines 102, 104, should be selected as the standby engine. In some other embodiments, the request includes an indication of one or more desired flight parameters for the aircraft 100, for instance an airspeed, an altitude, and the like.

After obtaining the request to enter the AOR, the AOR system 206 can optionally perform a safety check of the engines 102, 104. In embodiments in which the request includes an indication of which of the engines 102, 104, is to be selected as the active engine, the safety check can be performed only on the engine to be selected as the active engine. If the safety check indicates that the AOR cannot safely be entered into, the AOR system 206 can refuse entry into the AOR, and can for example alert the operator that the AOR cannot safely be entered into. The alert can be any suitable audible alert, visible alert, sensory alert, or the like.

If the safety check confirms that entry into the AOR can be performed safely, or if no safety check is performed, the AOR system 206 can then evaluate whether the operating parameters for the engines 102, 104, and/or of the rotor 108, are suitable for entry into the AOR.

The AOR system 206 determines the power capability for the active engine 102 and compare the power capability against a current power demand for the aircraft 100. The power capability for the active engine 102 can be determined using any suitable techniques. In some cases, the power capability for the active engine 102 is determined based on an operating altitude of the aircraft, an ambient temperature and/or pressure in the vicinity of the aircraft, a level of accessory power extraction, a bleed air level, and any other suitable parameters. In some other cases, the power capability for the active engine 102 is determined using one or more modelling techniques. Other approaches are considered.

In some embodiments, the power capability for the active engine and the current power demand for the aircraft can be expressed as percentage-values, where 100% represents a maximum power output for one of the engines 102, 104. Other approaches for expressing the power capability and the current power demand are considered. For example, the current power demand can be set at 140%, which could mean that both engines 102, 104 are operating at 70% capacity. In another example, the current power demand can be set at 90%, which could mean that both engines 102, 104 are operating at 45% capacity.

When the current power demand is less than the power capability of the active engine 102, the AOR system 206 can cause a gradual reduction in the power output of the standby engine 104 and a gradual increase in the power output of the active engine 102, until the standby engine 104 reaches a predetermined standby power level, and until the active engine 102 reaches a power level which provides sufficient power to meet the current power demand. The changes in power output for the active and standby engines 102, 104 can be substantively continuous, step-wise, irregular, or performed in any other suitable fashion. In some embodiments, once the standby engine 104 reaches the standby power level and the active engine is providing power to meet the current power demand, the AOR system 206 can alert the operator that the aircraft 100 has successfully entered the AOR.

When the current power demand is greater than the power capability of the active engine 102, the AOR system 206 can implement one or more techniques for preparing the aircraft 100 to enter the AOR. In some embodiments, the AOR system 206 can issue an alert to the operator indicating that the current power demand for the aircraft 100 cannot be met by the active engine 102, for example via the operator input 230, or via a different system forming part of the aircraft 100.

The AOR system 206 adjusts the power levels of the active and standby engines 102, 104, to prepare the aircraft 100 for entry into the AOR. Optionally, the AOR system 206 can also adjust one or more flight controls for the aircraft 100 to compensate for the adjustment in the power level of the standby engine 104.

When the current power demand is greater than the power capability of the active engine 102, the AOR system 206 causes a gradual reduction in the power output of the standby engine 104. The AOR system 206 further cause a gradual increase in the power output of the active engine 102. In some instances, the reduction and increase occur substantively simultaneously; in other instances, the increase in the power output of the active engine 102 can begin sometime after the start of the reduction in the power output of the standby engine 104. In some of these cases, the operator of the aircraft 100 can be expected to implement various modifications to the flight parameters for the aircraft 100, including adjusting rotor speed, rotor blade angles, and the like, to compensate for the change in power output of the engines 102, 104.

In one example, the current power demand is at 140%, and both the active and standby engines are at 70% power level, which can be 70% of a maximum power level, of a cruise power level, or of any other suitable reference power level. Because operation in the AOR places one engine in the standby mode, the remaining active engine cannot produce sufficient power to meet the current power demand of 140%. Thus, to enter the AOR, the power level of the standby engine 104 is reduced to 30%, at which point the sum of the active and standby engines 102, 104 power levels is 100% (70% + 30%). From this point, the power level of the standby engine 104 is reduced to 0%, and the power level of the active engine 102 is increased to 100%. The changes in the power levels of the active and standby engines 102, 104 can take place over any suitable time period. For instance, the changes in the power levels can take place over several seconds or several minutes, to give the operator of the aircraft 100 sufficient time to react and implement changes to the other flight parameters of the aircraft 100.

The AOR system 206 can compensate for changes in the power level of the standby engine 104 by causing one or more changes in the power level of the active engine and/or in one or more flight controls of the aircraft 100. In some embodiments, the AOR system 206 effects the changes in the flight controls via an optional automatic flight control system (AFCS) 207 of the controller 210. The AFCS 207 can be configured for adjusting one or more inputs acquired from the operator input 230. The operator input 230 can include a collective lever input, a cyclic input, a pedal input, and/or any other suitable inputs for controlling operation of the aircraft 100. In some embodiments, the AFCS 207 can adjust the inputs by way of mechanical linkages, actuators, or the like, which adjust the position and/or orientation of various surfaces and mechanical machines. In other embodiments, the AFCS 207 can adjust analog or digital signals transmitted to actuators or other devices which control operation of the engines 102, 104, and/or of the rotor 108. Other approaches are also considered.

In some of these cases, when the current power demand is greater than the power capability of the active engine 102, the AOR system 206 can provide a target power level to be provided by the active engine 102, for example to the AFCS 207, or to another component of the aircraft 100, for example an avionics controller, which can be coupled to the controller 210, the operator input 230, and the multi-engine system 105 in any suitable fashion. The target power level can, for example, correspond to a maximum power level for the active engine 102, or any other suitable level, as determined by the AOR system 206.

Once the AFCS 207 receives the target power level, the AFCS 207 can perform one or more adjustments to flight controls, including the collective lever input, the cyclic input, the pedal input, and/or any other suitable inputs, to adjust the flight parameters of the aircraft 100 to achieve the target power level. For example, the AFCS 207 can adjust the pitch of the blades of the rotor 108, the pitch of blades of a tail rotor, and the like, in order to maintain flight altitude and trajectory, while reducing airspeed. The AOR system 206 can concurrently adjust the power level for the engines 102, 104, so that the standby engine 104 can achieve the standby power level, and the active engine 102 can reach a power level sufficient for meeting the current power demand.

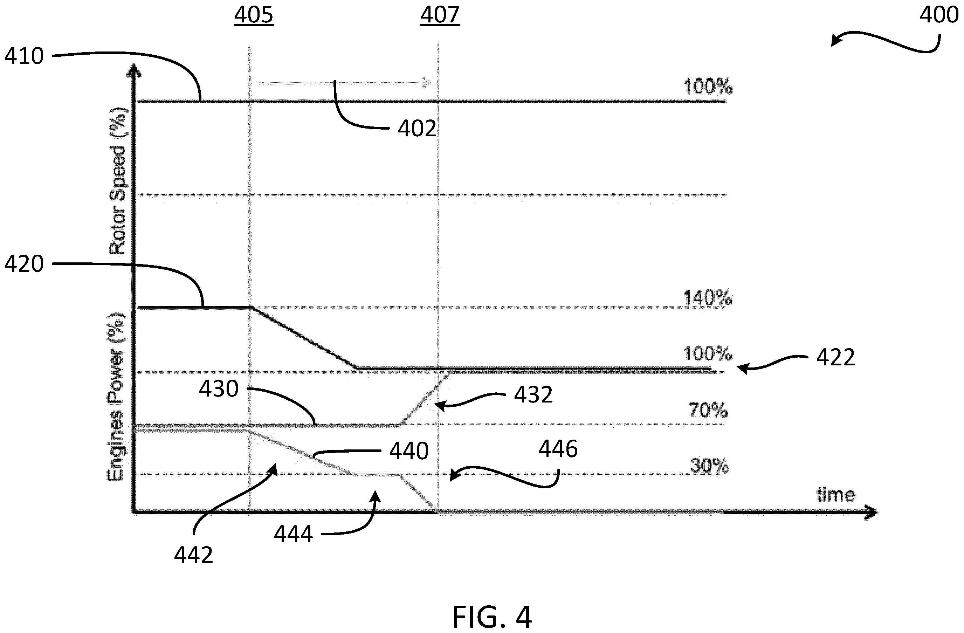

With reference to FIG. 4, there is shown a graphical representation of an example approach 400 for controlling entry into the AOR. Line 410 illustrates the rotor speed as a percentage of a maximum value; and line 420 represents the total engine power output, for example the combined output of engines 102, 104. In this example, the AOR system 206, and/or the AFCS 207, controls the operation of the aircraft 100 to achieve a target power level 422 of 100% when in the AOR.

At time 405, a request to enter into the AOR is received. Transition into the AOR occurs during transition period 402, and is substantively completed by time 407. Line 440, which represents the power level of the standby engine 104, illustrates a decrease in the power level during period 442. During this period, the total power level 420 also decreases, commensurate with the decrease in the power level 440 of the standby engine 104. At the end of period 442, the total power level 420 reaches the target power level 422, which corresponds to the maximum power output for the active engine 102 (i.e. 100%).

In some embodiments, a stabilizing period 444 can be used to stabilize the operation of the aircraft 100. In some embodiments, adjustments to the flight controls of the aircraft 100 are performed during the stabilizing period 444. In other embodiments, adjustments are made to the flight controls substantively throughout the transition period 402.

After the stabilizing period 444, the power level 440 of the standby engine 104 is reduced to the standby power level during period 446. Substantively concurrently, during period 432, the power level 430 of the active engine 102 is increased to the target power level 422. Once the active engine 102 reaches the target power level 422, the active engine 102 is responsible for supplying substantively all power required by the aircraft 100.

During the transition period 402, the rotor speed 410 for the rotor 108 of the aircraft 100 is substantively unchanged. This can result from the adjustments made by the AFCS 207, the AOR 206, and/or the controller 210 generally, to the flight controls. By adjusting the flight controls, the rotor speed can be maintained substantively constant throughout the transition period 402, which can assist the operator of the aircraft 100 in maintaining control of the aircraft 100.

It should be noted that the approach 400 is one example, and that others are also considered. In an alternative example, the power levels 430, 440 of both the active and standby engines 102, 104 can be decreased from time 405 until the total power level 420 reaches the target power level 422. After this point, the power level 430 of the active engine 102 is increased while the power level 440 of the standby engine 104 is decreased.

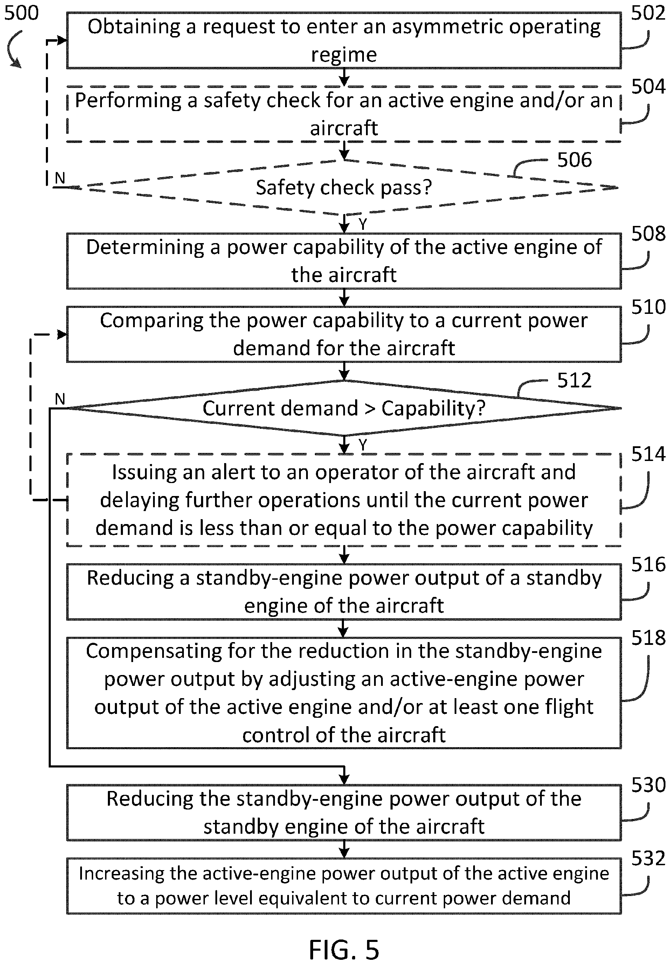

With reference to FIG. 5, there is shown a flowchart illustrating a method 500 for operating a rotorcraft, in the context of controlling entry into the AOR for the aircraft 100. The aircraft 100 is a rotorcraft, for instance a helicopter. At step 502, a request to enter the AOR is obtained. The request can be obtained from an operator, for example via the operator input 230, or from a control system of the aircraft 100, for example the controller 210. In some embodiments, the request can include an indication of which of the engines 102, 104 should be the active engine, for example the engine 102, an indication of a target engine power, or any other suitable information.

Optionally, at step 504, a safety check is performed for the active engine 102 and/or for the aircraft 100. The safety check can relate to any suitable operating parameters of the active engine 102 and/or the aircraft 100, including, for instance, a standby engine, for instance the standby engine 104. At decision step 506, a determination is made regarding whether the active engine 102 and/or the aircraft 100 passed the safety check. When the safety check does not pass, the method 500 can return to some previous step, or can exit and inform the operator of the aircraft 100 that the AOR cannot safely be entered into. When the safety check does pass, the method 500 can move to step 508.

At step 508, a power capability of the active engine 102 of the aircraft 100 is determined. The power capability can be based on various operating parameters for the aircraft 100, including altitude, ambient temperature and pressure, accessory power extraction, bleed air levels, and the like. At step 510, the power capability of the active engine 102 is compared to a current power demand for the aircraft 100. In some embodiments, the current power demand is indicative of the total amount of power produced by all engines of the aircraft 100, for example engines 102, 104. The comparison can be performed in any suitable fashion. At decision step 512, the method 500 can branch based on whether the current power demand is greater than the power capability of the active engine 102. When the current power demand is greater than the power capability, the method 500 can proceed to step 514. When the current power demand is less than or equal to the power capability, the method 500 can proceed to step 530.

Optionally, at step 514, following a determination that the current power demand is greater than the power capability, an alert can be issued to the operator of the aircraft 100, and further operations of the method 500 can be delayed until the current power demand becomes less than or equal to the power capability of the active engine 102. In some embodiments, the method 500 can exit, and no further steps are performed until a subsequent request to enter the AOR is received. In other embodiments, the method 500 can return to decision step 510, and repeat the comparison between the power capability and the current power demand.

In cases in which step 514 is not performed, the method proceeds from decision step 512 to step 516 following a determination that the current power demand is greater than the power capability. At step 516, a standby-engine power output of a standby engine, for instance the standby engine 104, is reduced. The standby-engine power output of the standby engine 104 can be reduced gradually, in accordance with a predetermined pattern or schedule, or in any other suitable fashion. The standby-engine power output can be reduced, for instance, to the standby power level.

At step 518, the reduction in the standby-engine power output is compensated for by adjusting an active-engine power output of the active engine 102 and/or by adjusting at least one flight control of the aircraft 100. This can include increasing the power level of the active engine 102 in any suitable fashion, including concurrently with reducing the power level of the standby engine 104. Alternatively, or in addition, adjustments to the blade angle of the main rotor 108 of the aircraft 100, for instance via the collective input, to the tail rotor of the aircraft 100, for instance via the pedal input, or to other flight controls, including the cyclic input, can be performed, to compensate for the reduction in the standby-engine power output of the standby engine 104.

When the current power demand is less than or equal to the power capability, the method 500 can proceed to step 530. At step 530, the standby-engine power output of the standby engine 104 can be reduced, for instance to the standby power level. At step 532, the active-engine power output of the active engine 102 is increased, for instance to match the current power demand, or to reach the target power level. In some embodiments, steps 530 and 532 can be performed substantively concurrently. The changes in the first and second output power can be performed in accordance with any suitable schedules, patterns, plans, or the like.

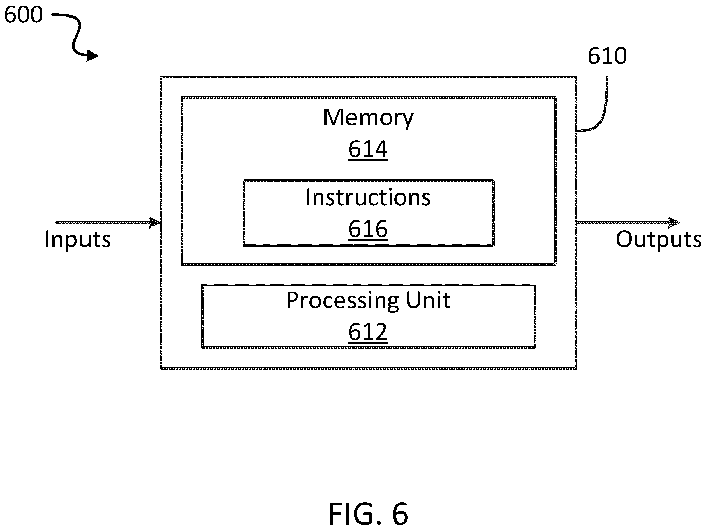

With reference to FIG. 6, the method 500 is implemented by a computing device 610, which can embody part or all of the controller 210, the AOR system 206, and/or the AFCS system 207. The computing device 610 comprises a processing unit 612 and a memory 614 which has stored therein computer-executable instructions 616. The processing unit 612 may comprise any suitable devices configured to implement the functionality of the AOR system 206 and/or the functionality described in the method 500, such that instructions 616, when executed by the computing device 610 cause the functions/acts/steps performed by the AOR system 206 and/or described in the method 500 as provided herein to be executed. The processing unit 612 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, custom-designed analog and/or digital circuits, or any combination thereof.

The memory 614 comprises non-transitory computer readable storage medium, for example, but not limited to, an electronic, magnetic, optical, electromagnetic, infrared, or semiconductor system, apparatus, or device, or any suitable combination of the foregoing. The memory 614 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 614 may comprise any storage means (e.g., devices) suitable for retrievably storing machine-readable instructions 616 executable by processing unit 612.

The methods and systems for operating a rotorcraft as described herein may be implemented in a high level procedural or object oriented programming or scripting language, or a combination thereof, to communicate with or assist in the operation of a computer system, for example the computing device 610. Alternatively, the methods and systems described herein may be implemented in assembly or machine language. The language may be a compiled or interpreted language.

Embodiments of the methods and systems described herein may also be considered to be implemented by way of a non-transitory computer-readable storage medium having a computer program stored thereon. The computer program may comprise computer-readable instructions which cause the processing unit 612 of the computing device 610, to operate in a specific and predefined manner to perform the functions described in the method 500.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The above description is meant to be exemplary only, and one skilled in the art will recognize that changes may be made to the embodiments described without departing from the scope of the present disclosure. Still other modifications which fall within the scope of the present disclosure will be apparent to those skilled in the art, in light of a review of this disclosure.

Various aspects of the systems and methods described herein may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be apparent to those skilled in the art that changes and modifications may be made without departing from this invention in its broader aspects.

## Claims

1. A method for operating a rotorcraft (100) comprising a plurality of engines (102, 104) configured to provide motive power to the rotorcraft (100), the method comprising:
obtaining a request to enter into an asymmetric operating regime (AOR), in which at least one first engine of the plurality of engines (102, 104) is an active engine (102) and is operated in an active mode to provide motive power to the rotorcraft (100) and at least one second engine of the plurality of engines (102, 104) is a standby engine (104) and is operated in a standby mode to provide substantially no motive power to the rotorcraft (100);
determining a power capability of the active engine (102) of the rotorcraft (100);
comparing the power capability to a current power demand for the rotorcraft (100); and
when the current power demand is greater than the power capability of the active engine (102):
reducing a standby-engine power output of the standby engine (104) of the rotorcraft (100); and
compensating for the reduction in the standby-engine power output by adjusting an active-engine power output of the active engine (102) and/or at least one flight control of the rotorcraft (100).

2. The method of claim 1, wherein reducing the standby-engine power output of the standby engine (104) comprises:
reducing the standby-engine power output to a first intermediate power level; and
responsive to an increase in the active-engine power output, reducing the standby-engine power output to a standby power level lower than the first intermediate power level.

3. The method of claim 2, wherein compensating for the reduction in the standby-engine power output comprises at least one of:
responsive to the standby-engine power output reaching the first intermediate power level, increasing the active-engine power output to a power level corresponding to the power capability; and
reducing the active-engine power output to a second intermediate power level, wherein the sum of the first and second intermediate power levels is equivalent to the power capability of the active engine, and after the active-engine power output reaches the second intermediate power level, increasing the active-engine power output to a subsequent power level equivalent to the power capability.

4. The method of any of claims 1 to 3, wherein compensating for the reduction in the standby-engine power output comprises:
determining a requisite total power for the rotorcraft (100); and
transmitting an indication of the requisite total power to an autopilot system (207) of the rotorcraft (100) to cause the autopilot system (207) to adjust the at least one flight control of the rotorcraft (100) to achieve the requisite total power, the at least one flight control comprising a main rotor blade pitch, a tail rotor blade pitch, and/or a cyclic input for the rotorcraft (100), wherein, optionally, compensating for the reduction in standby-engine power output comprises adjusting the at least one flight control of the rotorcraft (100) based on input (230) from an operator of the rotorcraft (100).

5. The method of any of claims 1 to 4, further comprising, responsive to obtaining the request to enter into the AOR performing a safety check for the active engine (102) and/or the rotorcraft (100).

6. The method of any of claims 1 to 5, further comprising, when the current power demand is greater than the power capability of the active engine (102):
issuing an alert to an operator of the rotorcraft (100); and
delaying the reducing and compensating until the current power demand is less than or equal to the power capability of the active engine (102).

7. The method of any of claims 1 to 6, further comprising, when the current power demand is less than or equal to the power capability of the active engine (102):
reducing the standby-engine power output of the standby engine (104) of the rotorcraft (100); and
increasing the active-engine power output of the active engine (102) to a power level equivalent to the current power demand.

8. The method of any of claims 1 to 7, wherein determining the power capability of the active engine (102) is based on an altitude of the rotorcraft (100), an airspeed of the rotorcraft (100), an ambient temperature, an accessory power extraction level, and/or a bleed air extraction level.

9. A system (610) for operating a rotorcraft (100) comprising a plurality of engines (102, 104) configured to provide motive power to the rotorcraft (100), **characterised in that** the system (610) comprises:
a processing unit (612); and
a non-transitory computer-readable medium (614) having stored thereon program instructions (616) executable by the processing unit (612) for:
obtaining a request to enter into an asymmetric operating regime (AOR), in which at least one first engine of the plurality of engines (102, 104) is an active engine (102) and is operated in an active mode to provide motive power to the rotorcraft (100) and at least one second engine of the plurality of engines (102, 104) is a standby engine (104) and is operated in a standby mode to provide substantially no motive power to the rotorcraft (100);
determining a power capability of the active engine (102) of the rotorcraft (100);
comparing the power capability to a current power demand for the rotorcraft (100); and
when the current power demand is greater than the power capability of the active engine (102):
reducing a standby-engine power output of the standby engine (104) of the rotorcraft (100); and
compensating for the reduction in the standby-engine power output by adjusting an active-engine power output of the active engine (102) and/or at least one flight control of the rotorcraft (100).

10. The system (610) of claim 9, wherein reducing the standby-engine power output of the standby engine (104) comprises:
reducing the standby-engine power output to a first intermediate power level; and
responsive to an increase in the active-engine power output, reducing the standby-engine power output to a standby power level lower than the first intermediate power level.

11. The system (610) of claim 10, wherein compensating for the reduction in the standby-engine power output comprises at least one of:
responsive to the standby-engine power output reaching the first intermediate power level, increasing the active-engine power output to a power level corresponding to the power capability;
reducing the active-engine power output to a second intermediate power level, wherein the sum of the first and second intermediate power levels is equivalent to the power capability of the active engine (102); and
after the active-engine power output reaches the second intermediate power level, increasing the active-engine power output to a subsequent power level equivalent to the power capability.

12. The system (610) of any of claims 9 to 11, wherein compensating for the reduction in the standby-engine power output comprises:
determining a requisite total power for the rotorcraft (100); and
transmitting an indication of the requisite total power to an autopilot system (207) of the rotorcraft (100) to cause the autopilot system (207) to adjust the at least one flight control of the rotorcraft (100) to achieve the requisite total power, the at least one flight control comprising a main rotor blade pitch, a tail rotor blade pitch, and/or a cyclic input for the rotorcraft (100), wherein, optionally, compensating for the reduction in the standby-engine power output comprises adjusting the at least one flight control of the rotorcraft (100) based on input (230) from an operator of the rotorcraft (100).

13. The system (610) of any of claims 9 to 12, wherein the program instructions (612) are further executable for, responsive to obtaining the request to enter into the AOR performing a safety check for the active engine (102) and/or the rotorcraft (100).

14. The system (610) of any of claims 9 to 13, wherein the program instructions (612) are further executable for, when the current power demand is greater than the power capability of the active engine (102):
issuing an alert to an operator of the rotorcraft (100); and
delaying the reducing and compensating until the current power demand is less than or equal to the power capability of the active engine (102).

15. The system (610) of any of claims 9 to 14, wherein the program instructions (612) are further executable for, when the current power demand is less than or equal to the power capability of the active engine (102):
reducing the standby-engine power output of a standby engine (104) of the rotorcraft (100); and
increasing the active-engine power output of the active engine (102) to a power level equivalent to the current power demand.

## Patentansprüche

1. Verfahren zum Betreiben eines Drehflüglers (100), der eine Vielzahl von Triebwerken (102, 104) umfasst, die dazu konfiguriert sind, Antriebskraft an den Drehflügler (100) bereitzustellen, wobei das Verfahren umfasst:
Erhalten einer Anforderung, in ein asymmetrisches Betriebsregime (AOR) einzutreten, in dem mindestens ein erstes Triebwerk der Vielzahl von Triebwerken (102, 104) ein aktives Triebwerk (102) ist und in einem aktiven Modus betrieben wird, um Antriebsleistung an den Drehflügler (100) bereitzustellen, und mindestens ein zweites Triebwerk der Vielzahl von Triebwerken (102, 104) ein Bereitschaftstriebwerk (104) ist und in einem Bereitschaftsmodus betrieben wird, um im Wesentlichen keine Antriebsleistung an den Drehflügler (100) bereitzustellen;
Bestimmen einer Leistungsfähigkeit des aktiven Triebwerks (102) des Drehflüglers (100);
Vergleichen der Leistungsfähigkeit mit einem aktuellen Leistungsbedarf für den Drehflügler (100); und
wenn der aktuelle Leistungsbedarf größer ist als die Leistungsfähigkeit des aktiven Triebwerks (102):
Verringern einer Leistungsabgabe des Bereitschaftstriebwerks des Bereitschaftstriebwerks (104) des Drehflüglers (100); und
Kompensieren der Verringerung der Bereitschaftstriebwerksleistung durch Einstellen einer aktiven Triebwerksleistung des aktiven Triebwerks (102) und/oder mindestens einer Flugsteuerung des Drehflüglers (100).

2. Verfahren nach Anspruch 1, wobei das Verringern der Bereitschaftstriebwerksleistungsabgabe des Bereitschaftstriebwerks (104) umfasst:
Verringern der Ausgangsleistung des Bereitschaftstriebwerks auf einen ersten Zwischenleistungspegel; und
als Reaktion auf eine Erhöhung der aktiven Triebwerkleistungsabgabe Verringern der Bereitschaftstriebwerkleistungsabgabe auf einen Bereitschaftsleistungspegel, der niedriger als der erste Zwischenleistungspegel ist.

3. Verfahren nach Anspruch 2, wobei das Kompensieren der Verringerung der Leistungsabgabe des Bereitschaftstriebwerks mindestens eines von Folgendem umfasst:
als Reaktion darauf, dass die Leistungsabgabe des Bereitschaftstriebwerks den ersten Zwischenleistungspegel erreicht, Erhöhen der Leistungsabgabe des aktiven Triebwerks auf einen Leistungspegel, der der Leistungsfähigkeit entspricht; und Reduzieren der aktiven Triebwerkleistungsabgabe auf einen zweiten Zwischenleistungspegel, wobei die Summe des ersten und des zweiten Zwischenleistungspegels äquivalent zu der Leistungsfähigkeit des aktiven Triebwerks ist, und wenn die aktive Triebwerkleistungsabgabe den zweiten Zwischenleistungspegel erreicht hat, Erhöhen der aktiven Triebwerkleistungsabgabe auf einen nachfolgenden Leistungspegel, der äquivalent zur Leistungsfähigkeit ist.

4. Verfahren nach einem der Ansprüche 1 bis 3, wobei das Kompensieren der Verringerung der Leistungsabgabe des Bereitschaftstriebwerks Folgendes umfasst:
Bestimmen einer erforderlichen Gesamtleistung für den Drehflügler (100); und
Übertragen einer Angabe der erforderlichen Gesamtleistung an ein Autopilotsystem (207) des Drehflüglers (100), um das Autopilotsystem (207) zu veranlassen, die mindestens eine Flugsteuerung des Drehflüglers (100) so einzustellen, dass die erforderliche Gesamtleistung erreicht wird, wobei die mindestens eine Flugsteuerung eine Hauptrotorblattanstellung, eine Heckrotorblattanstellung und/oder eine zyklische Eingabe für den Drehflügler (100) umfasst, wobei wahlweise das Kompensieren der Verringerung der Leistungsabgabe des Bereitschaftstriebwerks Anpassen der mindestens einen Flugsteuerung des Drehflüglers (100) basierend auf einer Eingabe (230) von einem Bediener des Drehflüglers (100) umfasst.

5. Verfahren nach einem der Ansprüche 1 bis 4, das ferner als Reaktion auf das Erhalten der Anforderung zum Eintreten in das AOR Durchführen einer Sicherheitsüberprüfung für das aktive Triebwerk (102) und/oder den Drehflügler (100) umfasst.

6. Verfahren nach einem der Ansprüche 1 bis 5, ferner umfassend, wenn der aktuelle Leistungsbedarf größer als die Leistungsfähigkeit des aktiven Triebwerks (102) ist:
Ausgeben einer Warnung an einen Bediener des Drehflüglers (100); und
Verzögern des Verringerns und Kompensierens, bis der aktuelle Leistungsbedarf kleiner oder gleich der Leistungsfähigkeit des aktiven Triebwerks (102) ist.

7. Verfahren nach einem der Ansprüche 1 bis 6, ferner umfassend, wenn der aktuelle Leistungsbedarf kleiner oder gleich der Leistungsfähigkeit des aktiven Triebwerks (102) ist:
Verringern der Leistungsabgabe des Bereitschaftstriebwerks des Bereitschaftstriebwerks (104) des Drehflüglers (100); und
Erhöhen der aktiven Triebwerkleistungsabgabe des aktiven Triebwerks (102) auf einen Leistungspegel, der dem aktuellen Leistungsbedarf entspricht.

8. Verfahren nach einem der Ansprüche 1 bis 7, wobei das Bestimmen der Leistungsfähigkeit des aktiven Triebwerks (102) auf einer Höhe des Drehflüglers (100), einer Fluggeschwindigkeit des Drehflüglers (100), einer Umgebungstemperatur, einem Nebenleistungsextraktionspegel und/oder einem Zapfluftextraktionspegel beruht.

9. System (610) zum Betreiben eines Drehflüglers (100), der eine Vielzahl von Triebwerken (102, 104) umfasst, die dazu konfiguriert sind, Antriebskraft an den Drehflügler (100) bereitzustellen, **dadurch gekennzeichnet, dass** das System (610) umfasst:
eine Verarbeitungseinheit (612); und
ein nichtflüchtiges computerlesbares Medium (614) mit darauf gespeicherten Programmanweisungen (616), die durch die Verarbeitungseinheit (612) ausführbar sind zum:
Erhalten einer Anforderung, in ein asymmetrisches Betriebsregime (AOR) einzutreten, in dem mindestens ein erstes Triebwerk der Vielzahl von Triebwerken (102, 104) ein aktives Triebwerk (102) ist und in einem aktiven Modus betrieben wird, um Antriebsleistung an den Drehflügler (100) bereitzustellen, und mindestens ein zweites Triebwerk der Vielzahl von Triebwerken (102, 104) ein Bereitschaftstriebwerk (104) ist und in einem Bereitschaftsmodus betrieben wird, um im Wesentlichen keine Antriebsleistung an den Drehflügler (100) bereitzustellen;
Bestimmen einer Leistungsfähigkeit des aktiven Triebwerks (102) des Drehflüglers (100);
Vergleichen der Leistungsfähigkeit mit einem aktuellen Leistungsbedarf für den Drehflügler (100); und
wenn der aktuelle Leistungsbedarf größer ist als die Leistungsfähigkeit des aktiven Triebwerks (102):
Verringern einer Leistungsabgabe des Bereitschaftstriebwerks des Bereitschaftstriebwerks (104) des Drehflüglers (100); und
Kompensieren der Verringerung der Bereitschaftstriebwerksleistung durch Einstellen einer aktiven Triebwerksleistung des aktiven Triebwerks (102) und/oder mindestens einer Flugsteuerung des Drehflüglers (100).

10. System (610) nach Anspruch 9, wobei das Verringern der Bereitschaftstriebwerksleistungsabgabe des Bereitschaftstriebwerks (104) umfasst:
Verringern der Ausgangsleistung des Bereitschaftstriebwerks auf einen ersten Zwischenleistungspegel; und
als Reaktion auf eine Erhöhung der aktiven Triebwerkleistungsabgabe Verringern der Bereitschaftstriebwerkleistungsabgabe auf einen Bereitschaftsleistungspegel, der niedriger als der erste Zwischenleistungspegel ist.

11. System (610) nach Anspruch 10, wobei das Kompensieren der Verringerung der Leistungsabgabe des Bereitschaftstriebwerks mindestens eines von Folgendem umfasst:
als Reaktion darauf, dass die Leistungsabgabe des Bereitschaftstriebwerks den ersten Zwischenleistungspegel erreicht, Erhöhen der Leistungsabgabe des aktiven Triebwerks auf einen Leistungspegel, der der Leistungsfähigkeit entspricht;
Reduzieren der Leistungsabgabe des aktiven Triebwerks auf einen zweiten Zwischenleistungspegel, wobei die Summe des ersten und des zweiten Zwischenleistungspegels äquivalent zu der Leistungsfähigkeit des aktiven Triebwerks (102) ist; und
wenn die aktive Triebwerkleistungsabgabe den zweiten Zwischenleistungspegel erreicht hat, Erhöhen der aktiven Triebwerkleistungsabgabe auf einen nachfolgenden Leistungspegel, der äquivalent zur Leistungsfähigkeit ist.

12. System (610) nach einem der Ansprüche 9 bis 11, wobei das Kompensieren der Verringerung der Leistungsabgabe des Bereitschaftstriebwerks umfasst:
Bestimmen einer erforderlichen Gesamtleistung für den Drehflügler (100); und
Übertragen einer Angabe der erforderlichen Gesamtleistung an ein Autopilotsystem (207) des Drehflüglers (100), um das Autopilotsystem (207) zu veranlassen, die mindestens eine Flugsteuerung des Drehflüglers (100) so einzustellen, dass die erforderliche Gesamtleistung erreicht wird, wobei die mindestens eine Flugsteuerung eine Hauptrotorblattanstellung, eine Heckrotorblattanstellung und/oder eine zyklische Eingabe für den Drehflügler (100) umfasst, wobei wahlweise das Kompensieren der Verringerung der Leistungsabgabe des Bereitschaftstriebwerks Anpassen der mindestens einen Flugsteuerung des Drehflüglers (100) basierend auf einer Eingabe (230) von einem Bediener des Drehflüglers (100) umfasst.

13. System (610) nach einem der Ansprüche 9 bis 12, wobei die Programmbefehle (612) ferner ausführbar sind, um als Reaktion auf das Erhalten der Anforderung zum Eintreten in das AOR eine Sicherheitsüberprüfung für das aktive Triebwerk (102) und/oder den Drehflügler (100) durchzuführen.

14. System (610) nach einem der Ansprüche 9 bis 13, wobei, wenn der aktuelle Leistungsbedarf größer als die Leistungsfähigkeit des aktiven Triebwerks (102) ist, die Programmanweisungen (612) ferner ausführbar sind zum:
Ausgeben einer Warnung an einen Bediener des Drehflüglers (100); und
Verzögern des Verringerns und Kompensierens, bis der aktuelle Leistungsbedarf kleiner oder gleich der Leistungsfähigkeit des aktiven Triebwerks (102) ist.

15. System (610) nach einem der Ansprüche 9 bis 14, wobei, wenn der aktuelle Leistungsbedarf kleiner oder gleich der Leistungsfähigkeit des aktiven Triebwerks (102) ist, die Programmanweisungen (612) ferner ausführbar sind zum:
Verringern der Leistungsabgabe des Bereitschaftstriebwerks des Bereitschaftstriebwerks (104) des Drehflüglers (100); und
Erhöhen der aktiven Triebwerkleistungsabgabe des aktiven Triebwerks (102) auf einen Leistungspegel, der dem aktuellen Leistungsbedarf entspricht.

## Revendications

1. Procédé de fonctionnement d'un giravion (100) comprenant une pluralité de moteurs (102, 104) configurés pour fournir une puissance motrice au giravion (100), le procédé comprenant :
l'obtention d'une demande d'entrée dans un régime de fonctionnement asymétrique (AOR), dans lequel au moins un premier moteur de la pluralité de moteurs (102, 104) est un moteur actif (102) et est actionné dans un mode actif pour fournir de la puissance motrice au giravion (100) et au moins un second moteur de la pluralité de moteurs (102, 104) est un moteur de secours (104) et est actionné dans un mode de secours pour ne fournir sensiblement aucune puissance motrice au giravion (100) ;
la détermination d'une capacité de puissance du moteur actif (102) du giravion (100) ;
la comparaison de la capacité de puissance à une demande de puissance actuelle pour le giravion (100) ; et
lorsque la demande de puissance actuelle est supérieure à la capacité de puissance du moteur actif (102) :
la réduction d'une puissance de sortie de moteur de secours du moteur de secours (104) du giravion (100) ; et
la compensation de la réduction de la puissance de sortie de moteur de secours en ajustant une puissance de sortie de moteur actif du moteur actif (102) et/ou au moins une commande de vol du giravion (100).

2. Procédé selon la revendication 1, dans lequel la réduction de la puissance de sortie de moteur de secours du moteur de secours (104) comprend :
la réduction de la puissance de sortie de moteur de secours à un premier niveau de puissance intermédiaire ; et
en réponse à une augmentation de la puissance de sortie de moteur actif, la réduction de la puissance de sortie de moteur de secours à un niveau de puissance de secours inférieur au premier niveau de puissance intermédiaire.

3. Procédé selon la revendication 2, dans lequel la compensation de la réduction de la puissance de sortie de moteur de secours comprend au moins l'une parmi :
en réponse au fait que la puissance de sortie de moteur de secours atteint le premier niveau de puissance intermédiaire, l'augmentation de la puissance de sortie de moteur actif à un niveau de puissance correspondant à la capacité de puissance ; et
la réduction de la puissance de sortie de moteur actif à un second niveau de puissance intermédiaire, dans lequel la somme des premier et second niveaux de puissance intermédiaires est équivalente à la capacité de puissance du moteur actif, et après que la puissance de sortie de moteur actif a atteint le second niveau de puissance intermédiaire, l'augmentation de la puissance de sortie de moteur actif à un niveau de puissance ultérieur équivalent à la capacité de puissance.

4. Procédé selon l'une quelconque des revendications 1 à 3, dans lequel la compensation de la réduction de la puissance de sortie de moteur de secours comprend :
la détermination d'une puissance totale requise pour le giravion (100) ; et
la transmission d'une indication de la puissance totale requise à un système de pilotage automatique (207) du giravion (100) pour amener le système de pilotage automatique (207) à régler l'au moins une commande de vol du giravion (100) pour atteindre la puissance totale requise, l'au moins une commande de vol comprenant un pas de pale de rotor principal, un pas de pale de rotor de queue et/ou une entrée cyclique pour le giravion (100), dans lequel, éventuellement, la compensation de la réduction de la puissance de sortie de moteur de secours comprend le réglage de l'au moins une commande de vol du giravion (100) sur la base d'une entrée (230) d'un opérateur du giravion (100).

5. Procédé selon l'une quelconque des revendications 1 à 4, comprenant en outre, en réponse à l'obtention de la demande d'entrée dans l'AOR, l'exécution d'un contrôle de sécurité pour le moteur actif (102) et/ou le giravion (100).

6. Procédé selon l'une quelconque des revendications 1 à 5, comprenant en outre, lorsque la demande de puissance actuelle est supérieure à la capacité de puissance du moteur actif (102) :
l'émission d'une alerte à un opérateur du giravion (100) ; et
le fait de retarder la réduction et la compensation jusqu'à ce que la demande de puissance actuelle soit inférieure ou égale à la capacité de puissance du moteur actif (102).

7. Procédé selon l'une quelconque des revendications 1 à 6, comprenant en outre, lorsque la demande de puissance actuelle est inférieure ou égale à la capacité de puissance du moteur actif (102) :
la réduction de la puissance de sortie de moteur de secours du moteur de secours (104) du giravion (100) ; et
l'augmentation de la puissance de sortie de moteur actif du moteur actif (102) à un niveau de puissance équivalent à la demande de puissance actuelle.

8. Procédé selon l'une quelconque des revendications 1 à 7, dans lequel la détermination de la capacité de puissance du moteur actif (102) est basée sur une altitude du giravion (100), une vitesse du giravion (100), une température ambiante, un niveau d'extraction de puissance accessoire, et/ou un niveau d'extraction d'air de prélèvement.

9. Système (610) de fonctionnement d'un giravion (100) comprenant une pluralité de moteurs (102, 104) configurés pour fournir de la puissance motrice au giravion (100), **caractérisé en ce que** le système (610) comprend :
une unité de traitement (612) ; et
un support non transitoire lisible par ordinateur (614) sur lequel sont stockées des instructions de programme (616) exécutables par l'unité de traitement (612) pour :
obtenir une demande d'entrée dans un régime de fonctionnement asymétrique (AOR), dans lequel au moins un premier moteur de la pluralité de moteurs (102, 104) est un moteur actif (102) et est actionné dans un mode actif pour fournir de la puissance motrice au giravion (100) et au moins un second moteur de la pluralité de moteurs (102, 104) est un moteur de secours (104) et est actionné dans un mode de secours pour ne fournir sensiblement aucune puissance motrice au giravion (100) ;
déterminer une capacité de puissance du moteur actif (102) du giravion (100) ;
comparer la capacité de puissance à une demande de puissance actuelle pour le giravion (100) ; et
lorsque la demande de puissance actuelle est supérieure à la capacité de puissance du moteur actif (102) :
réduire une puissance de sortie de moteur de secours du moteur de secours (104) du giravion (100) ; et
compenser la réduction de la puissance de sortie de moteur de secours en ajustant une puissance de sortie de moteur actif du moteur actif (102) et/ou au moins une commande de vol du giravion (100) .

10. Système (610) selon la revendication 9, dans lequel la réduction de la puissance de sortie de moteur de secours du moteur de secours (104) comprend :
la réduction de la puissance de sortie de moteur de secours à un premier niveau de puissance intermédiaire ; et
en réponse à une augmentation de la puissance de sortie de moteur actif, la réduction de la puissance de sortie de moteur de secours à un niveau de puissance de secours inférieur au premier niveau de puissance intermédiaire.

11. Système (610) selon la revendication 10, dans lequel la compensation de la réduction de la puissance de sortie de moteur de secours comprend au moins l'une parmi :
en réponse au fait que la puissance de sortie de moteur de secours atteint le premier niveau de puissance intermédiaire, l'augmentation de la puissance de sortie de moteur actif à un niveau de puissance correspondant à la capacité de puissance ; la réduction de la puissance de sortie de moteur actif à un second niveau de puissance intermédiaire, dans lequel la somme des premier et second niveaux de puissance intermédiaires est équivalente à la capacité de puissance du moteur actif (102) ; et
après que la puissance de sortie de moteur actif a atteint le second niveau de puissance intermédiaire, l'augmentation de la puissance de sortie de moteur actif à un niveau de puissance ultérieur équivalent à la capacité de puissance.

12. Système (610) selon l'une quelconque des revendications 9 à 11, dans lequel la compensation de la réduction de la puissance de sortie de moteur de secours comprend :
la détermination d'une puissance totale requise pour le giravion (100) ; et
la transmission d'une indication de la puissance totale requise à un système de pilotage automatique (207) du giravion (100) pour amener le système de pilotage automatique (207) à régler l'au moins une commande de vol du giravion (100) pour atteindre la puissance totale requise, l'au moins une commande de vol comprenant un pas de pale de rotor principal, un pas de pale de rotor de queue et/ou une entrée cyclique pour le giravion (100), dans lequel, éventuellement, la compensation de la réduction de la puissance de sortie de moteur de secours comprend le réglage de l'au moins une commande de vol du giravion (100) sur la base d'une entrée (230) d'un opérateur du giravion (100).

13. Système (610) selon l'une quelconque des revendications 9 à 12, dans lequel les instructions de programme (612) sont en outre exécutables, en réponse à l'obtention de la demande d'entrer dans l'AOR, pour effectuer un contrôle de sécurité pour le moteur actif (102) et/ou le giravion (100).

14. Système (610) selon l'une quelconque des revendications 9 à 13, dans lequel les instructions de programme (612) sont en outre exécutables, lorsque la demande de puissance actuelle est supérieure à la capacité de puissance du moteur actif (102), pour :
émettre une alerte à un opérateur du giravion (100) ; et
retarder la réduction et la compensation jusqu'à ce que la demande de puissance actuelle soit inférieure ou égale à la capacité de puissance du moteur actif (102).

15. Système (610) selon l'une quelconque des revendications 9 à 14, dans lequel les instructions de programme (612) sont en outre exécutables, lorsque la demande de puissance actuelle est inférieure ou égale à la capacité de puissance du moteur actif (102), pour :
réduire une puissance de sortie de moteur de secours d'un moteur de secours (104) du giravion (100) ; et
augmenter la puissance de sortie de moteur actif du moteur actif (102) à un niveau de puissance équivalent à la demande de puissance actuelle.
